# DEMANDE DE BREVET EUROPEEN

(11) **EP 1 273 476 A1**
(43) Date de publication de la demande: **08.01.2003**
(21) Numéro de dépôt: 02291564.9
(22) Date de dépôt: 24.06.2002
(51) Int. Cl.: B60Q 1/08, G01N 21/47

(54) **Procédé et dispositif pour détecter l'état d'humidité d'une route sur laquelle circule un véhicule**

(30) Priorité: 29.06.2001 FR 0108903
(71) Demandeur: VALEO VISION, 93012 Bobigny Cédex (FR)
(72) Inventeur: Leleve, Joel, c/o Valeo Vision, 93012 Bobigny Cedex (FR)

(57) **Abrégé**

L'invention concerne un procédé pour détecter l'état d'humidité d'une route sur laquelle circule un véhicule automobile dans des conditions d'obscurité nécessitant la mise en service de l'éclairage du véhicule, selon lequel on prévoit un capteur optique embarqué dans le véhicule, et on forme sur ce capteur optique une image d'une zone de la route située en avant du véhicule.

Selon l'invention, la zone de la route prise en considération est formée par au moins un segment orienté suivant le sens de progression du véhicule de sorte que l'image considérée est un profil en long (Rh, Rp) de la répartition lumineuse sur la route, et l'on compare cette image avec une référence (Rs) pour déterminer l'état d'humidité, et la référence (Rs) correspond au profil en long de la répartition lumineuse d'au moins un segment équivalent de route sèche.

## Description

L'invention est relative à un procédé pour détecter l'état d'humidité d'une route sur laquelle circule un véhicule automobile dans des conditions d'obscurité nécessitant la mise en service de l'éclairage du véhicule.

Dans les évolutions à venir de l'éclairage automobile, une importante modification portera sur le "projecteur pluie" (bad weather). Il s'agit d'un projecteur lumineux code qui doit assurer plusieurs niveaux de répartition lumineuse selon l'état d'humidité de la route, ainsi qu' une réduction de l'émission de lumière en direction des véhicules venant en sens inverse, et une augmentation de l'intensité lumineuse sur un bord ou les deux bords de la route.

Le document US-A-6 049 171 prévoit un capteur optique embarqué dans le véhicule et un moyen pour former sur ce capteur une image d'une zone de la route située en avant du véhicule. Si au moins un véhicule est détecté dans cette zone, l'intensité lumineuse du projecteur est réduite. Des capteurs d'humidité sont en outre prévus pour permettre d'éviter une réflexion excessive vers le conducteur de l'émission lumineuse des projecteurs. Toutefois, les capteurs d'humidité assurent la détection de gouttelettes sur le pare-brise, mais ne permettent pas une analyse de l'état d'humidité de la route et/ou de l'atmosphère.

Par ailleurs, on connaît d'après le document FR-A-2 721 400 un procédé et un dispositif de détection de brouillard ou de fumée, pour véhicule automobile, comprenant une caméra embarquée dans le véhicule et des moyens d'analyse du contraste des points de l'image. Mais l'état d'humidité de la route et/ou de l'atmosphère n'est pas détecté par ce dispositif.

L'invention a pour but, surtout, de fournir un procédé qui permet d'évaluer de manière fine l'état d'humidité d'une route, notamment pour choisir le niveau d'évolution d'un projecteur lumineux "pluie". Pour un tel projecteur, les différents niveaux de répartition lumineuse prévus en fonction de la route correspondent à plusieurs états pouvant, par exemple, être définis comme suit :
- route légèrement humide,
- route très mouillée,
- un état intermédiaire entre les deux précédents,
- pluie.

Il n'est guère concevable d'envisager une commande des fonctions du projecteur lumineux par une simple appréciation visuelle du conducteur. La perception de l'environnement par le conducteur est trop subjective, et il est impératif d'automatiser le système sur la base d'un procédé et d'un dispositif adaptés.

L'invention a donc pour but de fournir un tel procédé et un tel dispositif qui permettent une évaluation fiable de l'état d'humidité de la route, et/ou de l'atmosphère tout en étant relativement simple et économique.

Selon l'invention, le procédé pour détecter l'état d'humidité d'une route sur laquelle circule un véhicule, dans des conditions d'obscurité nécessitant l'éclairage du véhicule, procédé selon lequel on prévoit un capteur optique embarqué dans le véhicule, et on forme sur ce capteur optique une image d'une zone de la route située en avant du véhicule, est caractérisé par le fait que la zone de la route prise en considération est formée par au moins un segment orienté suivant le sens de progression du véhicule de sorte que l'image considérée est un profil en long de la répartition lumineuse sur la route, que l'on compare cette image avec une référence pour déterminer l'état d'humidité, et que la référence correspond au profil en long de la répartition lumineuse d'au moins un segment équivalent de route sèche.

Bien entendu, on peut effectuer une rotation de 90° du capteur optique, et lui associer un traitement du signal par exemple par un processeur de signal numérique (DSP, Digital Signal Processor) pour aboutir au même niveau d'information.

L'expérience a montré qu'avec la solution de l'invention, le profil en long de la répartition lumineuse de la route sèche et celui de la route légèrement humide se croisent pour un point situé à une certaine distance en avant du véhicule. La répartition lumineuse sur la route humide est plus forte que sur la route sèche pour les distances inférieures à ce point de croisement et devient plus faible au-delà de ce point de croisement.

De préférence, la longueur du segment de route prise en compte est suffisante pour faire apparaître le croisement du profil en long de la répartition lumineuse sur route humide et de la répartition lumineuse sur route sèche. Cette longueur peut être d'environ quinze mètres à partir du projecteur.

Avantageusement, l'image de la zone de la route formée sur le capteur optique est balayée suivant une direction située dans un plan vertical parallèle au sens de progression du véhicule; le profil en long de la répartition lumineuse sur un segment de route est obtenu par un tel balayage des éléments du capteur optique.

L'invention est également relative au dispositif pour détecter l'état d'humidité d'une route sur laquelle circule un véhicule automobile, dans des conditions d'obscurité telles que l'éclairage du véhicule est mis en service, ce dispositif comprenant un capteur optique embarqué dans le véhicule et un moyen pour former sur le capteur optique une image d'une zone de la route située en avant du véhicule, et étant caractérisé par le fait que le moyen pour former une image est propre à former une image d'au moins un segment orienté suivant le sens de progression du véhicule, de sorte que l'image considérée est un profil en long de la répartition lumineuse sur la route, qu'une référence correspondant au profil en long d'au moins un segment équivalent de route sèche est stockée dans un moyen de mémoire et qu'un moyen de comparaison est prévu pour comparer l'image reçue par le capteur optique avec la référence.

Avantageusement, le capteur optique est constitué par une barrette CCD (système à transfert de charge), une barrette de photodiodes ou par une caméra CCD ou MOS (à semi-conducteur métal-oxyde). Les cellules photosensibles constituant les points élémentaires ou pixels du capteur optique ou de la caméra sont balayés suivant une direction verticale, ou une direction située dans un plan vertical parallèle au sens de progression.

Le projecteur lumineux du véhicule peut être systématiquement orienté dans la direction correcte par rapport au sol, en particulier grâce à un dispositif de correction automatique. Le profil en long du segment servant de référence peut être relevé par temps sec et mis en mémoire.

Le dispositif de l'invention permet une quantification des niveaux d'humidité de la route.

Le capteur optique, notamment la caméra, peut avoir un champ angulaire suffisant, notamment de l'ordre de 60°, pour qu'il ne soit pas nécessaire de régler l'orientation de la caméra par rapport au sol. Un tel champ angulaire permet en effet d'absorber les variations d'inclinaison de la voiture par rapport au sol qui sont généralement inférieures à 10°. Toutefois, il est avantageux d'installer la caméra dans le projecteur et de lui appliquer la même correction automatique d'assiette que celle du projecteur.

L'invention consiste, mises à part les dispositions exposées ci-dessus, en un certain nombre d'autres dispositions dont il sera plus explicitement question ci-après à propos d'un exemple de réalisation décrit en détail avec référence aux dessins ci-annexés, mais qui n'est nullement limitatif. Sur ces dessins :
Fig. 1 est un schéma d'un dispositif pour détecter l'état d'humidité d'une route selon l'invention.
Fig.2 est un schéma partiel d'une matrice de points élémentaires d'un capteur optique, notamment d'une caméra CCD.
Fig.3 est une vue schématique de dessus d'un véhicule en circulation, équipé d'un dispositif détecteur d'humidité selon l'invention.
Fig.4 est un diagramme des profils en long du niveau lumineux relatif d'un segment de route humide, sèche et sous la pluie.
Fig.5, enfin, est un schéma plus détaillé du dispositif détecteur de l'état d'humidité de la route.

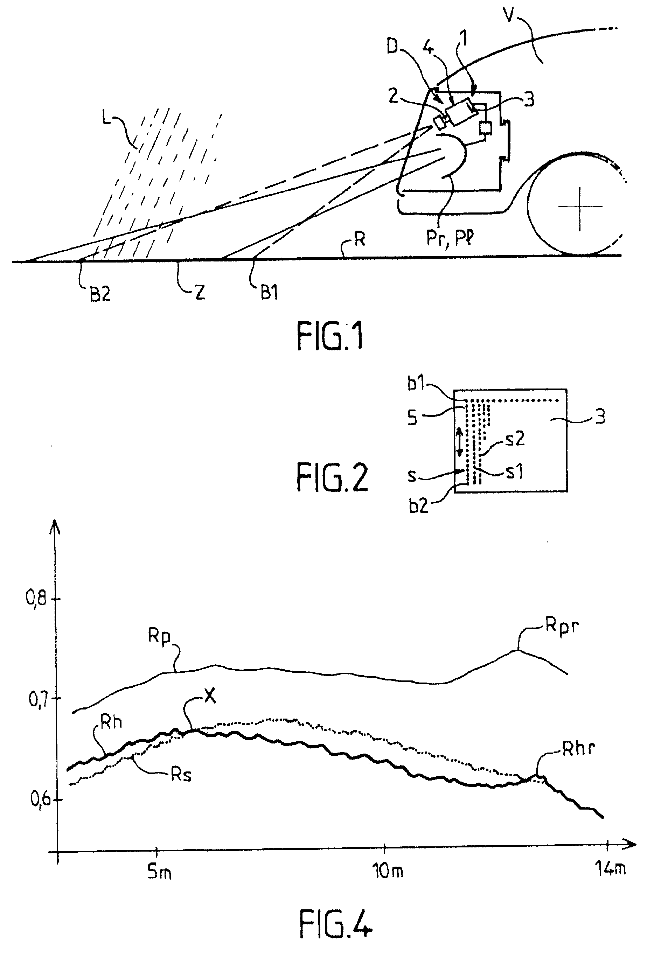

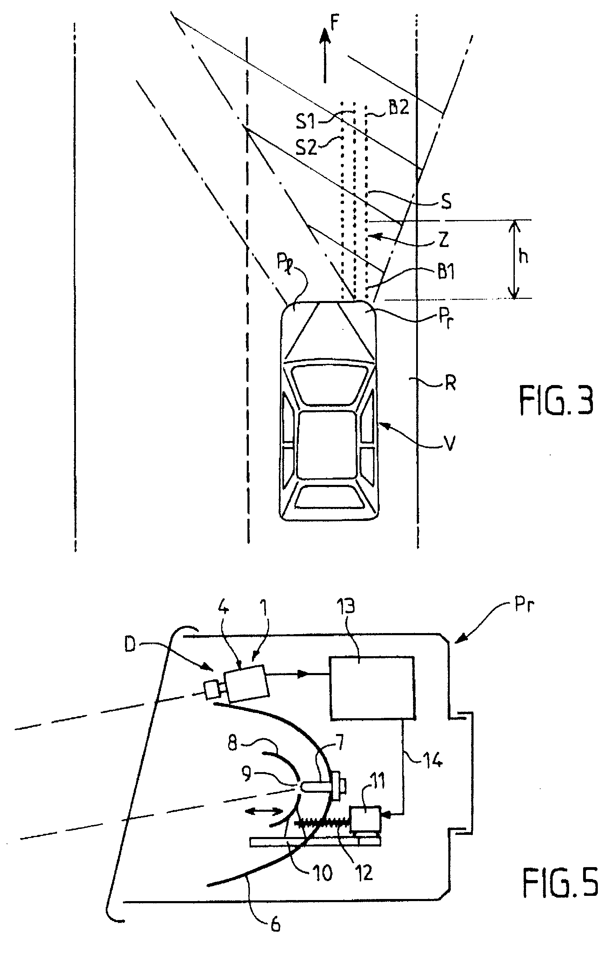

En se reportant aux dessins, notamment aux Figs.1 et 3, on peut voir un véhicule automobile V circulant sur une route R dans des conditions d'obscurité telles que l'éclairage du véhicule, en particulier les projecteurs lumineux avant Pr, Pl sont mis en service.

Un détecteur D de l'état d'humidité de la route R est prévu pour commander l'intensité de l'émission lumineuse des projecteurs Pr, Pl en fonction de cet état d'humidité de la route et de la forme de la route.

Le dispositif D comprend un capteur optique 1 embarqué dans le véhicule et un moyen 2 pour former sur le capteur optique 1 une image d'une zone Z de la route située en avant du véhicule.

Le capteur optique 1 est prévu pour travailler dans le rayonnement visible. Il est d'un type courant, bon marché. Le capteur optique 1 peut être constitué par une barrette CCD (système à transfert de charge) tandis que le moyen 2 est formé par au moins une lentille. Avantageusement, le capteur optique 1 est formé par la plaque réceptrice 3 (Fig.2) d'une caméra CCD 4 tandis que le moyen 2 est formé par l'objectif de cette caméra.

La plaque réceptrice 3 est formée par une matrice de cellules photosensibles constituant des points élémentaires ou pixels 5. La caméra est orientée de manière que la zone Z dont l'image est formée corresponde sensiblement à la zone éclairée par le projecteur Pr, Pl dans la condition "code".

La caméra 4 pourrait être d'un type différent, par exemple du type caméra MOS.

L'image prise en compte, et analysée quant à son niveau lumineux relatif, est celle d' au moins un segment S (Fig.3) de la route orienté suivant le sens de progression F du véhicule. L'image du segment S se forme suivant le segment s vertical de la plaque 3 (Fig.2).

Le balayage des pixels de la plaque 3 s'effectue suivant les colonnes comme indiqué par une flèche, c'est-à-dire dans un plan vertical parallèle au sens de progression F. A un point du segment S de la route R correspond un pixel de la matrice 3 sur l'image s. Ainsi, au point B1 du segment S situé le plus près du véhicule correspond le pixel b1 extrême du segment s sur Fig.2. Le pixel b2 inférieur du segment s sur Fig.2 correspond au point B2 de la route. A chaque point de la route situé à une distance différente en avant du véhicule on peut associer un niveau lumineux relatif fourni par le pixel correspondant de l'image s.

On peut ainsi établir le diagramme de Fig.4 sur lequel a été porté en ordonnée le niveau lumineux relatif détecté par un pixel du segment s (Fig.2) tandis qu'en abscisse est portée la distance h (Fig.3) du projecteur lumineux au point correspondant de la route.

La courbe Rs correspond à une route sèche, par exemple bitume sec, la courbe Rh correspond à une route humide (bitume humide) alors que la pluie a cessé ou est faible, et la courbe Rp correspond à une route sous une pluie abondante L.

La courbe Rs présente une convexité d'ensemble tournée vers le haut, le maximum du niveau lumineux relatif étant obtenu pour des points de la route situés à une distance comprise entre 5 et 10 mètres du projecteur pour l'exemple considéré.

La courbe Rh, pour route humide, débute au-dessus de la courbe Rs puis croise celle-ci en un point X correspondant à un point de la route situé, pour l'exemple considéré, à une distance d'environ 6 mètres du projecteur. La courbe Rh passe ensuite au-dessous de la courbe Rs. Au-delà d'une distance d'environ 12 ou 13 mètres, la courbe Rh présente une remontée Rhr formant une bosse dont le sommet peut légèrement dépasser la courbe Rs.

La courbe Rp qui correspond à une route sous une pluie abondante L ( Fig.1) est située nettement au-dessus des courbes Rs et Rh. Elle présente une partie convexe avec un maximum situé à une distance d'environ 6 ou 7 mètres du projecteur. La courbe Rp présente une remontée Rpr formant une bosse pour une distance du projecteur sensiblement égale à celle correspondant à la remontée Rhr.

Bien entendu, des états intermédiaires (non représentés) correspondant à des courbes comprises entre celles de Fig.4 peuvent être évalués.

Les relevés ou courbes de Fig.4, résultats de mesures expérimentales, illustrent la capacité du dispositif à discerner l'état de la route et la présence de pluie.

En présence de pluie, le signal Rp renvoyé sur les cellules photosensibles de la matrice 3 est l'addition de la réflexion sur le sol et sur les gouttes de pluie interceptées par le faisceau lumineux du projecteur. L'amplitude du signal et son niveau de bruit servent à caractériser cet état.

En absence de pluie, mais sur une route humide, le sol est moins diffusant et plus spéculaire qu'à l'état sec. On constate qu'au-delà de 5 mètres et plus précisément au-delà du point X de croisement, le signal Rh de la route humide devient inférieur au signal Rs du sol sec. Ceci s'explique par le fait qu'une partie de la lumière du faisceau lumineux est réfléchie vers l'avant du véhicule, ce qui entraîne une réduction de lumière captée par les cellules 5.

A l'état sec le niveau relevé Rs sert de référence.

Le dispositif de l'invention permet donc de bien distinguer une route humide d'une route sèche par la comparaison des courbes Rh et Rs qui présentent un point de croisement. Il est en outre possible de distinguer le degré d'humidité de la route avec des courbes intermédiaires non représentées.

Les comparaisons des niveaux lumineux relatifs relevés peuvent s'effectuer dans des tables, vis-à-vis des valeurs de référence correspondant à Rs.

Pour obtenir un fonctionnement correct il convient de s'assurer que les projecteurs Pr, Pl sont systématiquement orientés dans la bonne direction. Ceci est obtenu avec un dispositif de correction automatique de l'assiette de chaque projecteur qui maintient à une valeur constante l'angle d'inclinaison du faisceau lumineux du projecteur par rapport à la route comme expliqué à propos de Fig.5.

Les courbes Rs, Rh, et Rp de Fig.4 peuvent être obtenues par pondération des valeurs mesurées sur plusieurs segments parallèles S, S1, S2, etc... de la route. A chacun de ces segments de route correspond sur la plaque réceptrice 3 un segment s, s1, s2 situé sur une colonne de balayage verticale. Il est ainsi possible de déterminer une valeur moyenne du niveau lumineux relatif à une distance h du projecteur du véhicule en calculant la moyenne des niveaux lumineux relatifs de plusieurs points de la route situés à une même distance de ce projecteur.

La Figure 5 est un schéma plus détaillé d'un exemple de réalisation. La caméra 4 du dispositif détecteur d'humidité est logée dans le projecteur Pr et son optique est ainsi protégée contre les salissures. Un dispositif de nettoyage est généralement prévu pour l'optique du projecteur, de sorte que la caméra 4 en bénéficie.

Le réflecteur 6 du projecteur est systématiquement orienté dans la bonne direction par rapport au sol grâce à un dispositif de correction automatique d'assiette (non représenté). La caméra 4 est montée de manière à suivre les mouvements angulaires du réflecteur 6. La lampe 7 est disposée au centre du réflecteur 6. Un miroir concave 8 de plus petite dimension que le réflecteur 6, est disposé dans la concavité du réflecteur 6. Le miroir 8 comporte une ouverture 9 centrale pour l'engagement de la lampe 7. Le miroir 8 est monté mobile afin de modifier le faisceau lumineux à plusieurs niveaux de définition, selon l'état d'humidité de la route qui a été détecté.

Bien entendu, d'autres moyens peuvent être utilisés pour modifier la répartition de la lumière, par exemple avec des projecteurs de type elliptique.

Dans l'exemple représenté, le miroir 8 est monté sur un support 10 qui peut être déplacé en translation par un moteur électrique 11 agissant sur une vis 12. Le support 10 peut être monté coulissant suivant la direction de l'axe optique du réflecteur 6 ou pivotant autour d'un point d'articulation d'un bâti supportant le moteur 11.

Les informations fournies par la caméra 4 sur le niveau de luminosité des différents points de la route sont envoyées à un module électronique 13 de traitement des signaux qui effectue, dans des tables, la comparaison du relevé de niveaux lumineux des points de la route avec la référence Rs (Fig.4) stockée dans des moyens de mémoire. La courbe de référence Rs peut être mise à jour automatiquement ou à l'initiative du conducteur lors d'une circulation sur une route sèche.

Le module électronique 13 est un module de traitement d'images, connu en lui-même. La quantité d'informations est importante et permet une discrimination fine des états d'humidité de la route.

Selon l'état d'humidité discriminé, le module 13 envoie sur sa ligne de sortie 14 un signal de commande au moteur 11 pour déplacer le miroir mobile 8 d'une amplitude déterminée afin de modifier le niveau de définition du faisceau lumineux selon l'état d'humidité détecté. Une commande similaire est prévu pour l'autre projecteur P1.

L'utilisation, selon l'invention, d'une caméra standard 4 ou de capteurs optiques CCD bon marché est particulièrement avantageuse. La caméra pourrait être utilisée à d'autres fins, par exemple allumage automatique des phares, détection de brouillard. L'intégration du dispositif dans le projecteur permet de bénéficier de l'autonettoyage généralement prévu pour l'optique du projecteur, et assure une protection mécanique du dispositif.

## Revendications

1. Procédé pour détecter l'état d'humidité d'une route sur laquelle circule un véhicule automobile dans des conditions d'obscurité nécessitant la mise en service de l'éclairage du véhicule, selon lequel on prévoit un capteur optique (1) embarqué dans le véhicule, et on forme sur ce capteur optique une image d'une zone (Z) de la route située en avant du véhicule, **caractérisé par le fait que** la zone (Z) de la route prise en considération est formée par au moins un segment (S) orienté suivant le sens de progression (F) du véhicule de sorte que l'image considérée (s) est un profil en long (Rh, Rp) de la répartition lumineuse sur la route, que l'on compare cette image avec une référence (Rs) pour déterminer l'état d'humidité, et que la référence (Rs) correspond au profil en long de la répartition lumineuse d'au moins un segment équivalent de route sèche.

2. Procédé selon la revendication 1, **caractérisé par le fait que** la longueur du segment de route (S) prise en compte est suffisante pour faire apparaître un croisement (X) du profil en long de la répartition lumineuse sur route humide (Rh) et de la répartition lumineuse (Rs) sur route sèche.

3. Procédé selon la revendication 1 ou 2, **caractérisé par le fait que** la longueur du segment de route (S) prise en compte est d'environ quinze mètres à partir du projecteur.

4. Procédé selon l'une des revendications précédentes, **caractérisé par le fait que** l'image (s) de la zone de la route formée sur le capteur optique est balayée suivant une direction située dans un plan vertical parallèle au sens de progression du véhicule.

5. Procédé selon l'une des revendications précédentes, **caractérisé par le fait que** la zone (Z) de la route prise en considération est formée par plusieurs segments parallèles (S, S1 S2,...) orientés suivant le sens de progression (F) du véhicule, qu'à chacun de ces segments de route correspond sur un segment image ( s, s1, s2,...) vertical, et qu'une valeur moyenne du niveau lumineux relatif à une distance (h) du projecteur du véhicule est déterminée en calculant la moyenne des niveaux lumineux relatifs de plusieurs points de la route situés à une même distance (h) de ce projecteur.

6. Dispositif pour détecter l'état d'humidité d'une route sur laquelle circule un véhicule automobile, dans des conditions d'obscurité telles que l'éclairage du véhicule est mis en service, comprenant un capteur optique (1) embarqué dans le véhicule et un moyen (2) pour former sur le capteur optique une image d'une zone (Z) de la route située en avant du véhicule, **caractérisé par le fait que** le moyen (2) est propre à former une image d'au moins un segment (S) orienté suivant le sens de progression du véhicule, de sorte que l'image considérée (s) est un profil en long de la répartition lumineuse sur la route, qu'une référence (Rs) correspondant au profil en long d'au moins un segment équivalent de route sèche est stockée dans un moyen de mémoire et qu'un moyen de comparaison est prévu pour comparer l'image reçue par le capteur optique avec la référence.

7. Dispositif selon la revendication 6, **caractérisé par le fait que** le capteur optique (1) est constitué par l'un des capteurs suivants : une barrette CCD, une barrette de photodiodes, une caméra CCD (4) ou MOS.

8. Dispositif selon la revendication 7, **caractérisé par le fait que** les cellules photosensibles constituant les points élémentaires ou pixels (5) du capteur optique (1) sont balayés suivant une direction située dans un plan vertical parallèle au sens de progression (F).

9. Dispositif selon l'une des revendication 6 à 8, **caractérisé par le fait que** le capteur optique (1) est formé par une caméra (4) ayant un champ angulaire suffisant, en particulier de l'ordre de 60°, pour qu'il ne soit pas nécessaire de régler l'orientation de la caméra par rapport au sol.

10. Dispositif selon l'une des revendication 6 à 9, **caractérisé par le fait que** le capteur optique (1) est formé par une caméra (4) installée dans le projecteur (Pr) et soumise à la même correction automatique d'assiette que le projecteur, lequel est systématiquement orienté dans la direction correcte par rapport au sol par un dispositif de correction automatique.

11. Dispositif selon l'une des revendication 6 à 10, **caractérisé par le fait qu'**il comporte un module électronique (13) de traitement d'images auquel sont envoyées les informations sur le niveau de luminosité des différents points de la route, le module électronique (13) effectuant la comparaison du relevé de niveaux lumineux des points de la route avec la référence (Rs) stockée dans des moyens de mémoire, et envoyant sur une ligne de sortie (14) un signal de commande pour modifier le niveau de définition du faisceau lumineux du projecteur selon l'état d'humidité détecté.
